# EUROPEAN PATENT APPLICATION

(11) **EP 1 976 179 A1**
(43) Date of publication of application: **01.10.2008**
(21) Application number: 06817888.8
(22) Date of filing: 24.11.2006
(51) Int. Cl.: H04L 9/32

(54) **A METHOD FOR WIRELESS ACCESS TO THE INTERNET FOR THE PRE-PAID CUSTOMER**

(30) Priority: 18.01.2006 CN 200610033166
(71) Applicant: Huawei Technologies Co., Ltd., Longgang District Shenzhen Guangdong 518129 (CN)
(72) Inventor: PAN, Haitao, Guangdong 518129 (CN)
(74) Representative: Epping - Hermann - Fischer
(86) International application number: PCT/CN2006/003161
(87) International publication number: WO 2007/082444

(57) **Abstract**

A method for wireless access to the internet for the pre-paid customer, includes: when wireless user device logs on the internet through wireless communication network, sends the user account and password information to the wireless communication network(S01), and said user account, password and the information of the pre-paid money are preserved in the wireless communication network; the said wireless communication network makes authorization to the wireless user device (S02), and if the authorization passes, allocates band-width for the wireless user(S03); if it not passes, refuses the connection to the wireless user device (S07); the said device logs on and accesses the internet (S04). While receiving the log off request information from the device, calculates the charge (S05), and deducts the money from said pre-paid sum, ends the access (S06). The present invention separates the network cost from the SIM card of the mobile device, and makes the authorization while logging on the network, it enriches the manners of logging on the web, avoids the economic damage to the innocent user brought by the illegal user.

## Description

This application claims the priority of Chinese patent application No. 200610033166.9 filed on January 18, 2006 with the Chinese Patent Office, entitled "METHOD FOR AN ACCESS TO THE INTERNET USING DATA CARD", the content of which is hereby incorporated by reference in its entirety.

### Field of the Invention

The present invention relates to the field of network technologies, and in particular to a method for wireless access of a prepaid user to the Internet.

### Background of the Invention

With the development of the society, information in social life, economy, scientific research, national defense, etc., is ever updated, and certain information has been increasingly used in a cross way in different fields. The development of any individual or group must rely on the achievement of others. Therefore, how to fully acquire information becomes one of the key issues. There exists various means for acquiring information. Among them, network is the best way at present for people to acquire information in a convenient, prompt and thorough manner, which is more popular compared with such media as TV and newspaper. At present, a user acquires information mostly through a wired broadband network, which has the advantages of large coverage and high bandwidth. However, the wired broadband network can only be accessed by connecting a PC to a fixed location. As a result, the user must bring a PC to a fixed location to surf the Internet, which is quite inconvenient. The user may also acquire information through a wireless local area network, which is more flexible in logon place compared with the wired broadband network, but is small in coverage, causing inconvenience to the user. Thanks to the significant advantages of a wireless network in terms of large coverage and mobility over other networks as a result of the continuous improvement of the wireless network, as well as the high popularization of mobile terminals as a result of the prompt development of the social economy, it becomes the best choice for people in various fields to acquire information through the wireless network by means of a mobile terminal or a wireless network card (which can be inserted into the mobile terminal or a PC to access the wireless network through a SIM card of the mobile terminal).

However, in the prior art, the following defects may occur when a user surfs the Internet using a mobile terminal or a wireless network card.

At present, when a user dials up to access the Internet via a mobile terminal or a wireless network card, the network system only verifies the SIM card used by the user, and does not authenticate the identity of the user according to certain security information. As long as the SIM card used by the user upon access is in a normal condition, e.g., there is no owing fee for the number of the SIM card, the user can access the Internet. All the fees thus occurring will be deducted from the account of the SIM card used upon access. Consequently, in the case that a mobile terminal or a wireless network card of user A of the mobile terminal has been lost and user B gets the mobile terminal or the wireless network card of user A, user B can surf the Internet directly using the mobile terminal or the wireless network card because no identity verification is required. All the fees thus occurring will have to be paid by user A, resulting in much loss and inconvenience to the legal user of mobile terminal.

### Summary of the Invention

The present invention is to provide a method for wireless access of a prepaid user to the Internet, which enables authentication of a user identity through information on a user account number and password set for a data card, so as to avoid an unreasonable fee for a legal user of mobile terminal due to illegal access of another user to the Internet.

An embodiment of the present invention provides a method for wireless access of a prepaid user to the Internet, including the following steps of:

when logging on the Internet via a wireless communication network, transmitting, by a wireless user terminal, information on a user account number and password to the wireless communication network, wherein information on user account numbers, passwords and prepaid amounts is kept at the wireless communication network in advance;

authenticating, by the wireless communication network, the wireless user terminal, and if the wireless user terminal passes the authentication, assigning bandwidth to the wireless user terminal; or if not, rejecting connection of the wireless user terminal; and

logging on and surfing the Internet by the terminal.

More advantageously, the method further includes:

upon receiving a disconnection request message from the wireless user terminal, calculating, by the wireless communication network, a fee, and deducting the fee from the prepaid amount; and

disconnecting the wireless user terminal from the Internet.

The step of transmitting information on a user account number and password to the wireless communication network includes: when logging on the Internet via the wireless communication network, transmitting, from the wireless user terminal, the information of the wireless user terminal on the user account number and password to a wireless packet gateway; and

transmitting, from the wireless packet gateway, the information on the user account number and password to an Authentication Authorization and Accounting (AAA) system.

Preferably, the step of authenticating the wireless user terminal includes:

acquiring, by the AAA system, information on the user account number and password from a database according to the user account number, determining whether the information on the password recorded in the acquired information is identical to the information on the password transmitted from the wireless user terminal, and if identical, assigning the bandwidth to the wireless user terminal; or if not, rejecting connection of the terminal.

Preferably, the step of authenticating the wireless user terminal includes:

transmitting, from the AAA system, to a cellphone intelligent network an authentication request message to perform authentication on the wireless user terminal, which carries the information on the user account number and password;

acquiring, by the cellphone intelligent network, information on the user account number and password from a database according to the user account number, and transmitting the information on the password recorded in the acquired information to the AAA system;

determining, by the AAA system, whether the information on the password transmitted from the cellphone intelligent network is identical to the information on the password transmitted from the wireless user terminal, and if identical, assigning the bandwidth to the wireless user terminal; or

if not, rejecting connection of the wireless user terminal.

More advantageously, the method further includes a step of deducting the surfing fee from the prepaid amount according to a quantity of traffic that has been transmitted to the wireless user terminal, upon disconnecting the terminal.

To sum up, according to the embodiments of the invention, the wireless user terminal may log on the wireless network using a data card, enriching the methods for a wireless user to access the Internet in the prior art. In addition, the fee for the surfing of the Internet is deducted directly from the data card, regardless of the SIM card of the mobile terminal. Thus, even if the mobile terminal of the user is lost, the user will not have to pay an unreasonable fee incurred by an illegal access of another user to the Internet. Furthermore, because the surfing fee is unrelated to the SIM card of the mobile terminal, when the mobile terminal of the user is unavailable, the user may surf the Internet by means of another mobile terminal, bringing much convenience to the user. In addition, because a password is set for the data card, even if the data card is lost, another user can not consume the amount in the data card because he/she will no pass the authentication; while the owner of the data card can still log on the network through the password corresponding to the user name of the data card, and thus will not suffer a loss due to the loss of the data card, guaranteeing the security for the user in terms of the surfing fee.

### Brief Description of the Drawings

Figure 1 is a flowchart illustrating an exemplary method for surfing the Internet using a data card according to the invention;

Figure 2 is a flowchart illustrating an AAA system performs authentication on the data card according to an embodiment of the invention;

Figure 3 is a flowchart illustrating a Cellphone Intelligent Network (CIN) performs authentication on the data card according to an embodiment of the invention;

Figure 4 is a flowchart of authenticating the data card and a SIM card according to an embodiment of the invention;

Figure 5 is a flowchart of authenticating the data card and the SIM card according to another embodiment of the invention; and

Figure 6 is a flowchart of authenticating the data card and the SIM card according to still another embodiment of the invention.

### Detailed Description of the Embodiments

For better understanding of the principle, features and advantages of the invention, the technical solutions thereof will be further detailed with reference to the accompanying drawings and the embodiments.

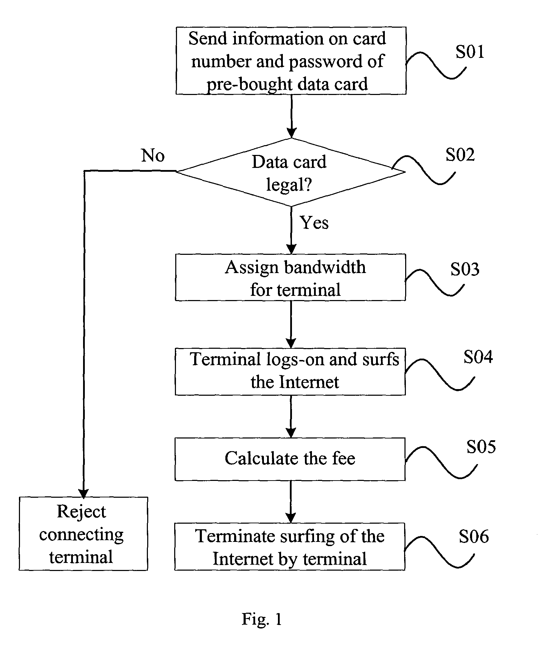

In the embodiments of the invention, an Authentication Authorization and Accounting (AAA) system or a Cellphone Intelligent Network (CIN) issues data cards containing a certain prepaid amount and sets a user account number and a password for each data card. A user may buy such a data card anytime and anywhere, and surf the Internet using the data card before the expiration date of the data card. When accessing the Internet, the user needs to enter through a terminal the user account number and the password of the data card for authenticating by the AAA system or the CIN issuing the data card, thus avoiding a fee for a legal user by the illegal access. Referring to Figure 1, a flow of a method for surfing the Internet using a data card according to the invention includes the following steps.

S01: during the process of logging on the Internet via a wireless communication network, a terminal transmits to an AAA system information on a user account number and password of a pre-bought data card via a Packet Data Serving Node (PDSN)/Gateway GPRS Support Node (GGSN), the data card being issued by the AAA system or CIN within the wireless communication network and containing information on a prepaid amount.

A user surfs the Internet using a bought data card containing a certain prepaid amount, thus enriching the methods for a user to access the Internet in the prior art.

S02: upon receiving the information on the user account number and password of the data card, the AAA system within the wireless communication network determines whether the data card corresponding to the user account number is issued by the AAA system; if yes, the AAA system performs authentication on the data card; or otherwise, the CIN performs authentication on the data card; and if the data card passes the authentication, S03 is performed; or otherwise, connection of the terminal is rejected.

Because a password is set for the data card, even if the data card is lost, another user other than the owner of the data card can not consume the amount in the data card because he or she will not pass the authentication; while if the owner of the data card has kept the user account number and the password of the data card, he or she can still logs on the network through the user account number and the password of the data card, and thus will not suffer a loss due to the loss of the data card, guaranteeing the security for the user in terms of the surfing fee. In addition, when a user requests logging on the network by means of a mobile terminal, the SIM card transmitting the network logging-on request will be authenticated. Therefore, even if the mobile terminal is lost, it can not be used by an illegal user to access the Internet, decreasing the risk for the user of the mobile terminal.

S03: the AAA system transmits to the PDSN/GGSN a message instructing to assign bandwidth to the terminal; and upon receiving the instructing message, the PDSN/GGSN assigns a corresponding bandwidth to the terminal.

S04: the terminal logs on and surfs the Internet.

S05: upon receiving a disconnection request message from the terminal, the PDSN/GGSN computes the quantity of the traffic that has been transmitted to the terminal and transmits the quantity of the traffic to the AAA system; the AAA system calculates a fee from the quantity of the traffic; the AAA system or the CIN that has issued the data card deducts the fee from the prepaid amount in the data card; and after the fee has been deducted, the AAA system transmits to the PDSN/GGSN a message instructing to disconnect the terminal from the Internet.

Because the fee for the surfing of the Internet is deducted directly from the data card, unrelated to the SIM card of the mobile terminal, even if the mobile terminal of the user is lost, the user will not have to pay an unreasonable fee incurred by an illegal access of another user to the Internet, guaranteeing the security for the user in terms of the surfing fee. Furthermore, because the surfing fee is unrelated to the SIM card of the mobile terminal, when the mobile terminal of the user is unavailable, the user may surf the Internet by means of another mobile terminal, bringing much convenience to the user.

S06: the PDSN/GGSN disconnects the terminal, terminating the surfing of the Internet by the terminal.

Particularly, S01 in the above embodiment may be implemented through the following steps.

S11: the user enters the user account number, e.g. 123 and the password, e.g. 135 of the data card by dialing-up through a client of the mobile terminal or a PC terminal, and sends to a wireless base station a request for an access to the Internet. If the client used by the user to dial up is the client of the mobile terminal, the user may enter directly via the user account number and password of the data card and then send the request for an access to the Internet. If the client used by the user to dial up is the client of the PC terminal, only when a wireless network card has been inserted into the PC terminal in advance can the user enter the user account number and password of the data card and then send the request for an access to the Internet.

S 12: the wireless base station transmits the received user account number 123 and the password 135 of the data card to the wireless packet gateway, such as the PDSN/GGSN, to request an authentication of the data card.

S13: the PDSN/GGSN transmits the user account number 123 and the password 135 of the data card to the AAA system via an Access-Request message under the Radius (Remote Authentication Dial In user Service)/Diameter (a new generation of AAA in place of the Radius) protocol, to request the AAA system to perform authentication on and authorize the data card.

In S02, authenticating the data card by the AAA system may be implemented particularly through the following step.

S211: the AAA system acquires, from the database, information of the data card, the user account number of which is 123, such as password, expiration date, applicability (e.g. whether the card can be used to surf the Internet over the current network or at the current location), and the amount left in the card, and determines whether the password in the acquired information is identical to the password 135 transmitted from the PDSN/GGSN, and if identical, S03 is performed; or otherwise, connection of the terminal is rejected.

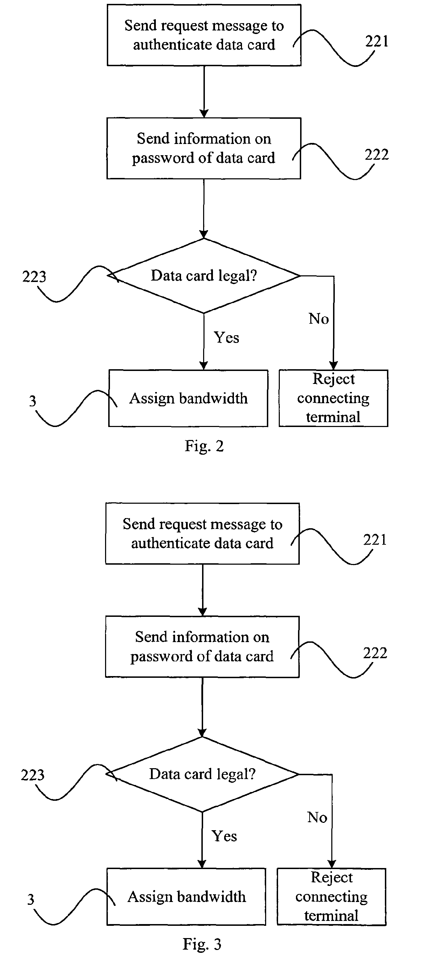

Authenticating the data card by the AAA system may also be implemented through a flow illustrated in Figure 2. Referring to Figure 2, a flow of authenticating the data card by the AAA system according to an embodiment of the invention is shown, which includes the following steps.

S221: the AAA system transmits to the CIN the user account number 123 and the password 135 of the data card, to request the CIN to check whether the data card is legal.

S222, the CIN acquires, from the database, information of the data card, the user account number of which is 123, such as password, expiration date, applicability (e.g. whether the card can be used to surf the Internet over the current network or at the current location), and the amount left in the card, and transmits to the AAA system the password of the data card recorded in the acquired information.

S223: the AAA system determines whether the password transmitted from the CIN is identical to the password 135 transmitted from the PDSN/GGSN, and if identical, S3 is performed; or otherwise, connection of the terminal is rejected.

Referring to Figure 3, a flow of authenticating the data card by the CIN according to an embodiment of the invention is shown, which includes the following steps.

S231: the AAA system transmits to the CIN the user account number 123 and the password 135 of the data card, to request the CIN to check whether the data card is legal.

S232, the CIN acquires, from the database, information of the data card, the user account number of which is 123, such as password, expiration date, applicability (e.g. whether the card can be used to surf the Internet over the current network or at the current location), and the amount left in the card, and determines whether the password in the acquired information is identical to the password 135 transmitted from the AAA system, and if identical, S233 is performed; or otherwise, connection of the terminal is rejected.

S233: the CIN transmits the result of the authentication, indicating whether the data card is legal, to the AAA system via a QUERY_USERINFO_ACC_RESP message, and then S03 is performed.

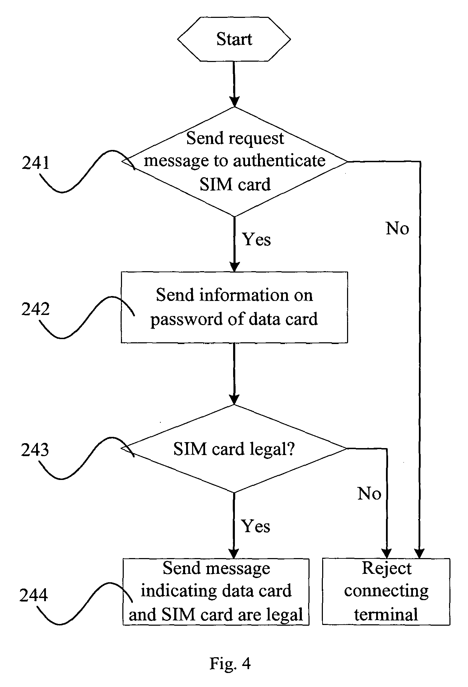

In S02 in the above embodiments, upon authentication of the data card, if the client used by the user to dial up is the client of the mobile terminal, authentication may also be performed on the SIM card of the mobile terminal in order to guarantee the legality of the terminal. When both the data card and the SIM card pass the authentication, S03 is performed; while if either of the data card and the SIM card does not pass the authentication, connection of the mobile terminal is rejected. In the case that the data card is issued by the AAA system, a flow as shown in Figure 4 of authenticating both the data card and the SIM card according an embodiment of the invention includes the following steps.

S241: the AAA system acquires, from the database, information of the data card, such as password, expiration date, applicability (e.g. whether the card can be used to surf the Internet over the current network or at the current location), and the amount left in the card, the user account number of the data card being 123, and determines whether the password in the acquired information is identical to the password 135 transmitted from the PDSN/GGSN, and if identical, S242 is performed; or otherwise, connection of the mobile terminal is rejected.

S242: the AAA system obtains the user account number of the SIM card of the mobile terminal from the information on the user account number and password transmitted from the PDSN/GGSN, and transmits the SIM card number to the CIN via a QUERY_USERINFO_ACC message under a dedicated protocol for exchanging information between different systems, to request the CIN to perform authentication on the SIM card.

S243: the CIN queries the database about information of the SIM card according to the SIM card number and performs authentication on the SIM card, and if the SIM card number passes the authentication, S244 is performed; or otherwise, the CIN transmits a message indicating the SIM card is illegal, and connection of the mobile terminal is rejected.

S244: the CIN transmits to the AAA system a message indicating both the data card and the SIM card are legal, and S03 is performed.

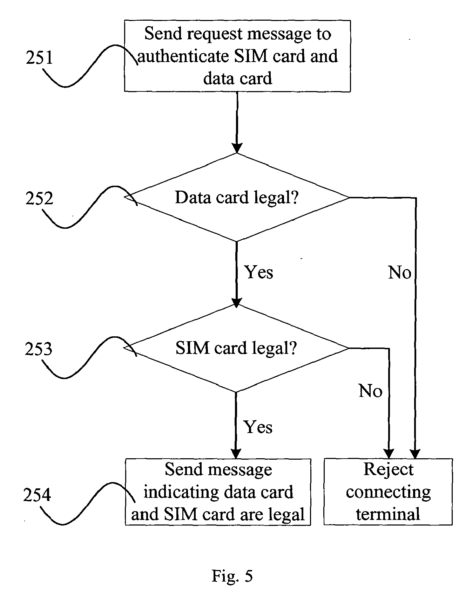

In the case that the data card is issued by the CIN, a flow as shown in Figure 5 of authenticating both the data card and the SIM card according another embodiment of the invention includes the following steps.

S251: the AAA system transmits to the CIN the user account number 123 and the password 135 of the data card to request the CIN to check whether the data card is legal; and obtains the SIM card number of the mobile terminal from the information on the user account number and password transmitted from the PDSN/GGSN, and transmits the SIM card number to the CIN via a QUERY_USERINFO_ACC message under a dedicated protocol for exchanging information between different systems, to request the CIN to perform authentication on the SIM card.

S252: the CIN acquires, from the database, information of the data card, the user account number of which is 123, such as password, expiration date, applicability (e.g. whether the card can be used to surf the Internet over the current network or at the current location), and the amount left in the card, and determines whether the password in the acquired information is identical to the password 135 transmitted from the PDSN/GGSN, and if identical, S253 is performed; or otherwise, connection of the mobile terminal is rejected.

S253: the CIN queries the database about information of the SIM card according to the SIM card number and performs authentication on the SIM card, and if the SIM card number passes the authentication, S254 is performed; or otherwise, connection of the mobile terminal is rejected.

S254: the CIN transmits to the AAA system a message indicating both the data card and the SIM card are legal, and S03 is performed.

In the embodiment as illustrated in Figure 5, the SIM card may be authenticated first, or the data card and the SIM card may be authenticated at the same time. When either of the data card and the SIM card does not pass the authentication, the user can not surf the Internet through the mobile terminal.

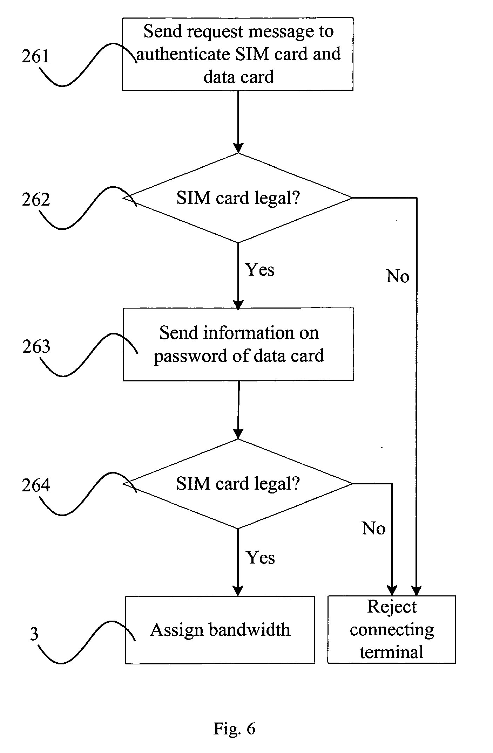

In the case that the data card is issued by the CIN, a flow as shown in Figure 6 of authenticating both the data card and the SIM card according still another embodiment of the invention includes the following steps.

S261: the AAA system transmits to the CIN the user account number 123 and the password 135 of the data card to request the CIN to check whether the data card is legal; and obtains the SIM card number of the mobile terminal from the information on the user account number and password transmitted from the PDSN/GGSN, and transmits the SIM card number to the CIN via a QUERY_USERINFO_ACC message under a dedicated protocol for exchanging information between different systems, to request the CIN to perform authentication on the SIM card.

S262: the CIN queries the database about information of the SIM card according to the SIM card number and performs authentication on the SIM card, and if the SIM card number passes the authentication, 263 is performed; or otherwise, connection of the mobile terminal is rejected.

S263: the CIN acquires, from the database, information of the data card, the user account number of which is 123, such as password, expiration date, applicability (e.g. whether the card can be used to surf the Internet over the current network or at the current location), and the amount left in the card, and transmits to the AAA system the password of the data card in the acquired information.

S264: the AAA system determines whether the password transmitted from the CIN is identical to the password 135 transmitted from the PDSN/GGSN, and if identical, S03 is performed; or otherwise, connection of the mobile terminal is rejected.

When authenticating the password of the data card, the AAA system or CIN may further perform authentication on the validity of the data card, including applicability, expiration date, the amount left in the card and so on, according to the information of the data card obtained directly or indirectly from the database. If the data card passes the authentication, S03 is performed according to the above authentication flow, or the SIM card is further authenticated. Otherwise, the AAA system rejects connection of the terminal; or the CIN transmits to the AAA system the result of the authentication indicating the data card is illegal, and the AAA system rejects connection of the terminal. In the authentication flows as showed in Figures 2 and 6, if the validity of the data card needs to be authenticated by the AAA system, the CIN also transmits information on the validity of the data card to the AAA system in S222 and S263.

In the above embodiments, between S02 and S03, the AAA system or CIN that has issued the data card may set information as to reserving a certain amount in the data card. If the data card is issued by the AAA system, the AAA system reserves a certain amount in the data card directly. If the data card is issued by the CIN, the AAA system transmits to the CIN a request for reserving a certain amount in the data card via an AUTH_PP_ACC message. The CIN reserves a corresponding amount according to the request and returns a message to the AAA system indicative of a successful amount reservation.

Furthermore, in the above embodiments, between S02 and S03, the AAA system may query about the amount left in the data card, compute the quantity of the traffic that can be paid with the amount, and transmit to the PDSN/GGSN the information on the quantity of the traffic that can be paid with the data card. Between S4 and S5, the PDSN/GGSN computes the quantity of the traffic that has been transmitted to the terminal; and when the quantity of the traffic is greater than or equal to the quantity of the traffic that can be paid with the prepaid amount in the data card, the PDSN/GGSN disconnects the terminal, terminating the surfing of the Internet by the terminal. Alternatively, between S04 and S05, the PDSN/GGSN computes in real time the quantity of the traffic that has been transmitted to the terminal and transmits the quantity of the traffic to the AAA system; and if the data card is issued by the AAA system, the AAA system calculates the surfing fee and deducts the service fee from the prepaid amount in the data card; or if the data card is issued by the CIN, the AAA system calculates the surfing fee according to the quantity of the traffic and transmits to the CIN a request for deducting the surfing fee from the prepaid amount in the data card, and the CIN deducts the corresponding surfing fee from the data card.

In the above embodiments, S05 may be performed as follows.

When the user sends a request for disconnection to the PDSN/GGSN through the client of the terminal, the PDSN/GGSN computes the quantity of the traffic that has been transmitted to the terminal, and transmits the quantity of the traffic to the AAA system. If the data card is issued by the AAA system, the AAA system calculates the surfing fee according to the quantity of the traffic transmitted from the PDSN/GGSN, deducts the surfing fee from the prepaid amount in the data card, and transmits to the PDSN/GGSN a message instructing to disconnect the terminal from the Internet. If the data card is issued by the CIN, the AAA system calculates the surfing fee according to the quantity of the traffic transmitted from the PDSN/GGSN and transmits to the CIN a request for deducting the surfing fee from the prepaid amount in the data card, the CIN deducts the corresponding surfing fee from prepaid amount in the data card and returns to the AAA system a message indicating the fee has been deducted, and the AAA system transmits to the PDSN/GGSN a message instructing to disconnect the terminal from the Internet.

From the process of deducting the surfing fee in S05, it can be seen that, if the data card is issued by the AAA system, the AAA system deducts the surfing fee directly from the data card. Compared with the process of deducting the surfing fee in the prior art, in which the AAA system calculates the service fee and requests the CIN to deduct the service fee, and the CIN deducts the corresponding surfing fee and returns a message indicating the service fee has been deducted, this reduces the interactions between systems, simplifies the service procedures and thus alleviates the burdens on the network, saves the time for the user to access the Internet, and brings convenience to the user.

The present invention has been described and illustrated by the embodiments of the present invention. It shall be recognized by those skilled in the art that those embodiments are merely illustrative and not restrictive, that the present invention shall not be limited thereto, and that various modifications and variations can be made thereto in light of the descriptions and the drawings without departing from the spirit and scope of the present invention as defined by the accompanying claims.

## Claims

1. A method for wireless access of a prepaid user to the Internet, comprising the following steps of:
when logging on the Internet via a wireless communication network, transmitting, by a wireless user terminal, information on a user account number and password to the wireless communication network, wherein information on user account numbers, passwords and prepaid amounts is kept at the wireless communication network in advance;
authenticating, by the wireless communication network, the wireless user terminal, and if the wireless user terminal passes the authentication, assigning bandwidth to the wireless user terminal; or if not, rejecting connection of the wireless user terminal; and
logging on and surfing the Internet by the terminal.

2. The method according to claim 1, further comprising:
upon receiving a disconnection request message from the wireless user terminal, calculating, by the wireless communication network, a fee, and deducting the fee from the prepaid amount; and
disconnecting the wireless user terminal from the Internet.

3. The method according to claim 1, wherein the step of transmitting information on a user account number and password to the wireless communication network comprises: when logging on the Internet via the wireless communication network, transmitting, from the wireless user terminal, the information of the wireless user terminal on the user account number and password to a wireless packet gateway; and
transmitting, from the wireless packet gateway, the information on the user account number and password to an Authentication Authorization and Accounting (AAA) system.

4. The method according to claim 3, wherein the step of authenticating the wireless user terminal comprises:
acquiring, by the AAA system, information on the user account number and password from a database according to the user account number, determining whether the information on the password recorded in the acquired information is identical to the information on the password transmitted from the wireless user terminal, and if identical, assigning the bandwidth to the wireless user terminal; or if not, rejecting connection of the terminal.

5. The method according to claim 3, wherein the step of authenticating the wireless user terminal comprises:
transmitting, from the AAA system, to a cellphone intelligent network an authentication request message to perform authentication on the wireless user terminal, wherein the authentication request message carries the information on the user account number and password;
acquiring, by the cellphone intelligent network, information on the user account number and password from a database according to the user account number, and transmitting the information on the password recorded in the acquired information to the AAA system;
determining, by the AAA system, whether the information on the password transmitted from the cellphone intelligent network is identical to the information on the password transmitted from the wireless user terminal, and if identical, assigning the bandwidth to the wireless user terminal; or
if not, rejecting connection of the wireless user terminal.

6. The method according to claim 3, wherein the step of authenticating the wireless user terminal comprises:
transmitting, from the AAA system, to a cellphone intelligent network an authentication request message to perform authentication on the wireless user terminal, wherein the authentication request message carries the information on the user account number and password;
acquiring, by the cellphone intelligent network, information on the user account number and password from a database according to the user account number, and determining whether the information on the password recorded in the acquired information is identical to the information on the password transmitted from the wireless user terminal, and if identical, transmitting a message indicating the wireless user terminal is legal from the cellphone intelligent network to the AAA system, and assigning the bandwidth to the wireless user terminal; or if not, transmitting a message indicating the wireless user terminal is illegal from the cellphone intelligent network to the AAA system, and rejecting connection of the wireless user terminal.

7. The method according to claim 3, further comprising authenticating a SIM card of the wireless user terminal, and if both the wireless user terminal and the SIM card pass the authentication, assigning the bandwidth to the wireless user terminal; or if not, rejecting connection of the wireless user terminal.

8. The method according to claim 7, wherein the step of authenticating the wireless user terminal comprises:
acquiring, by the AAA system, information on the user account number and password from a database according to the user account number, determining whether the information on the password recorded in the acquired information is identical to the information on the password transmitted from the wireless user terminal, and if identical, obtaining, by the AAA system, a SIM card number of the wireless user terminal, and transmitting to a cellphone intelligent network an authentication request message to perform authentication on the SIM card, wherein the authentication request message carries the SIM card number;
querying, by the cellphone intelligent network, a database about information of the SIM card, determining whether the SIM card is legal, and if legal, transmitting a message indicating the SIM card is legal from the cellphone intelligent network to the AAA system, and assigning the bandwidth to the wireless user terminal; or if not, transmitting a message indicating the SIM card is illegal from the cellphone intelligent network to the AAA system, and rejecting connection of the wireless user terminal.

9. The method according to claim 7, wherein the step of authenticating the wireless user terminal comprises:
obtaining, by the AAA system, a SIM card number of the wireless user terminal, and transmitting to a cellphone intelligent network an authentication request message to perform authentication on the wireless user terminal and the SIM card, which carries the information on the user account number and password as well as the SIM card number;
acquiring, by the cellphone intelligent network, information of the wireless user terminal from a database according to the user account number, and determining whether the information on the password recorded in the acquired information is identical to the information on the password transmitted from the wireless user terminal, and if not, transmitting a message indicating the wireless user terminal is illegal from the cellphone intelligent network to the AAA system, and rejecting connection of the wireless user terminal; or if identical, querying, by the cellphone intelligent network, a database about information of the SIM card, determining whether the SIM card is legal, and if legal, transmitting a message indicating both the wireless user terminal and the SIM card are legal from the cellphone intelligent network to the AAA system, and assigning the bandwidth to the wireless user terminal; or if not, transmitting a message indicating the SIM cad is illegal from the cellphone intelligent network to the AAA system, and rejecting connection of the wireless user terminal.

10. The method according to claim 7, wherein the step of authenticating the wireless user terminal comprises:
obtaining, by the AAA system, a SIM card number from a request message for the access to the Internet, and transmitting to a cellphone intelligent network an authentication request message to perform authentication on the wireless user terminal and the SIM card, wherein the authentication request message carries the information on the user account number and password as well as the SIM card number;
querying, by the cellphone intelligent network, a database about information of the SIM card, determining whether the SIM card is legal, and if not, transmitting a message indicating the SIM cad is illegal from the cellphone intelligent network to the AAA system, and rejecting connection of the wireless user terminal; or if legal, acquiring, by the cellphone intelligent network, information of the wireless user terminal from a database according to the user account number, and transmitting to the AAA system information on the password recorded in the acquired information;
determining, by the AAA system, whether the information on the password transmitted from the cellphone intelligent network is identical to the information on the password transmitted from the wireless user terminal, and if identical, assigning the bandwidth to the wireless user terminal; or if not, rejecting connection of the wireless user terminal.

11. The method according to any of claims 1-10, further comprising authenticating validity of the wireless user terminal when authenticating the wireless user terminal, which comprises authenticating the wireless user terminal with respect to applicability and expiration date, and if the wireless user terminal passes the authentication of the validity, performing the step 3; or if not, rejecting connection of the terminal.

12. The method according to any of claims 1-10, further comprising, between the step of authenticating the wireless user terminal and the step of assigning the bandwidth to the wireless user terminal, a step of setting information as to reserving an amount.

13. The method according to claim 11, wherein the step of setting the information as to reserving an amount comprises:
transmitting, from the AAA system, to a cellphone intelligent network a request for reserving an amount in the data card, and reserving, by the cellphone intelligent network, the amount for the user account number according to the request, and transmitting to the AAA system a message indicating the amount has been reserved.

14. The method according to claim 13, further comprising terminating the surfing of the Internet by the wireless user terminal when the wireless packet gateway detects the amount left for the user account number is less than or equal to the reserved amount.

15. The method according to any of claims 1-10, further comprising, between the step of authenticating the wireless user terminal and the step of assigning the bandwidth to the wireless user terminal, a step of querying, by an AAA system, an amount left in the data card, calculating a quantity of traffic that can be paid with the amount, and transmitting to the wireless packet gateway information on the quantity of the traffic that can be paid; and
computing, by the wireless packet gateway, a quantity of traffic that has been transmitted to the terminal, and when the quantity of the traffic is greater than or equal to the quantity of the traffic that can be paid, terminating the surfing of the Internet by the wireless user terminal.

16. The method according to any of claims 1-10, further comprising a step of deducting a surfing fee from the prepaid amount according to a quantity of traffic that has been transmitted to the wireless user terminal, upon disconnecting the wireless user terminal.

17. The method according to claim 16, wherein the step of deducting the surfing fee from the prepaid amount comprises:
computing, by the wireless packet gateway, a quantity of traffic that has been transmitted to the wireless user terminal, transmitting the quantity of the traffic to the AAA system, and deducting, by the AAA system, the surfing fee from the prepaid amount according to the quantity of the traffic.

18. The method according to claim 16, wherein the step of deducting the surfing fee from the prepaid amount comprises:
computing, by the wireless packet gateway, a quantity of traffic that has been transmitted to the wireless user terminal, transmitting the quantity of the traffic to the AAA system;
calculating, by the AAA system, the surfing fee from the quantity of the traffic, and transmitting to a cellphone intelligent network a request for deducting the surfing fee from the prepaid amount; and
deducting, by the cellphone intelligent network, the surfing fee from the prepaid amount.
